# EUROPÄISCHE PATENTSCHRIFT

(11) **EP 0 762 142 B1**
(45) Veröffentlichungstag und Bekanntmachung des Hinweises auf die Patenterteilung: **18.07.2001**
(21) Anmeldenummer: 96112453.4
(22) Anmeldetag: 01.08.1996
(51) Int. Cl.: G01S 15/89, A61B 8/00

(54) **Verfahren und Anordnung zum Abbilden eines Objekts mit Ultraschall mit optischer Signalübertragung**
Ultrasonic object imaging method and device with optic signal transmission
Procédé et dispositif pour faire une image d'un objet à ultrasons à transmission de signaux optique

(30) Priorität: 16.08.1995 DE 19530150
(43) Veröffentlichungstag der Anmeldung: 12.03.1997
(73) Patentinhaber: SIEMENS AKTIENGESELLSCHAFT, 80333 München (DE); SIEMENS MEDICAL SYSTEMS, INC., Iselin, New Jersey 08830 (US)
(72) Erfinder: Bartelt, Hartmut, Dr., 91056 Erlangen (DE); Granz, Bernd, Dr., 90522 Oberasbach (DE); Oppelt, Ralph, Dr., 91080 Uttenreuth (DE); Stapp, Bernhard, Dr., 90562 Kalchreuth (DE)
(74) Vertreter: Zedlitz, Peter, Dipl.-Inf.

(56) Entgegenhaltungen:
- EP-A- 0 397 960
- EP-A- 0 430 450
- WO-A-95/02197
- US-A- 5 125 410
- US-A- 5 419 329
- PROCEEDINGS OF THE ULTRASONICS SYMPOSIUM, CANNES, NOV. 1 - 4, 1994, Bd. 3, 1.November 1994, LEVY M;SCHNEIDER S C; MCAVOY B R (EDS ), Seiten 1519-1522, XP000195773 EMERY C D ET AL: "OPTOELECTRONIC TRANSMITTERS FOR MEDICAL ULTRASOUND TRANSDUCERS"

## Beschreibung

Die Erfindung betrifft ein Verfahren und eine Anordnung zum Abbilden eines Objekts mit Ultraschall.

In der medizinischen Diagnostik und der zerstörungsfreien Werkstoffprüfung sind Verfahren und Geräte zum Abbilden eines Raumgebiets des menschlichen Körpers bzw. des zu prüfenden Werkstoffs mit Hilfe der Puls-Echo-Methode bekannt. Das abzubildende Objekt wird mit Ultraschallpulsen beschallt und aus den im Objekt reflektierten Ultraschallechopulsen wird von einer Signalverarbeitungseinheit ein Ultraschallbild aufgebaut, das im allgemeinen einem zweidimensionalen Schnitt durch das Objekt entspricht. Zum Senden und Empfangen der Ultraschallpulse sind eindimensionale lineare Arrays und zweidimensionale, insbesondere matrixförmige Arrays von piezoelektrischen Wandlerelementen bekannt, die in einem Wandlerkopf (Applikator) integriert werden.

Die Wandlerelemente des Arrays werden in einem Sendemodus zu individuellen Sendezeitpunkten mit jeweils einem Sendepuls angeregt. Im allgemeinen werden diese Sendepulse von einem Sender in einem Hauptgerät erzeugt und über jeweils eine elektrische Signalleitung für jedes Wandlerelement übertragen. Durch Einstellen der Zeitverzögerungen zwischen den einzelnen Sendepulsen kann man mit dem Array einen schwenkbaren und auf das Objekt fokussierbaren Ultraschallstrahl senden (phased array). Bei einem linearen Array ist der Ultraschallstrahl in einer von der Normalen zur Arrayoberfläche und der Arrayachse aufgespannten Ebene und somit in nur einer Winkelrichtung schwenkbar, während bei einem zweidimensionalen Array der Ultraschallstrahl in einem Raumwinkelbereich um die Flächennormale und damit in zwei Winkelrichtungen schwenkbar ist. Damit der Ultraschallstrahl einen möglichst großen Winkel- bzw. Raumwinkelbereich überstrahlen kann, muß das mechanische und elektrische Überkoppeln zwischen den Wandlerelementen möglichst klein gehalten werden, beispielsweise unterhalb -30 dB. Die Dauer eines Sendemodus ist durch die maximale Verzögerungszeit zwischen dem zuerst angesteuerten Wandlerelement und dem zuletzt angesteuerten Wandlerelement festgelegt, die beispielsweise 15 µs betragen kann.

In einem auf den Sendemodus folgenden Empfangsmodus werden die vom Objekt, beispielsweise an Grenzflächen zwischen Medien verschiedener akustischer Impedanz, reflektierten Echopulse von den Wandlerelementen des Arrays empfangen und in elektrische Empfangssignale umgewandelt. Die Dauer eines Empfangsmodus ist von den Echopulsen bestimmt, die an den am tiefsten liegenden Zonen im Objekt reflektiert werden und damit am spätestens ankommen, und beträgt beispielsweise etwa 250 µs. Die Empfangssignale werden über die den Wandlerelementen zugeordneten elektrische Signalleitungen zur Signalverarbeitungseinheit im Hauptgerät übertragen und dort zum Aufbau eines Bildes des Objekts weiterverarbeitet. Im allgemeinen wird eine vorgegebene Anzahl von Sende-Empfangs-Zyklen zum Abtasten (electronic scan) des Objekts durchgeführt, die jeweils einen Sendemodus und einen zugehörigen Empfangsmodus umfassen. Aus den Empfangssignalen aller dieser Sende- und Empfangszyklen wird dann das Bild des Objekts erzeugt. Zum Umschalten zwischen Sendemodus und Empfangsmodus sind im Hauptgerät Sende-Empfangs-Weichen (Duplexer) vorgesehen, die im Sendemodus den Sender und im Empfangsmodus die Signalverarbeitungseinheit über die Signalleitungen mit den einzelnen Wandlerelementen elektrisch verbinden.

Jedes der beispielsweise 128 Wandlerelemente des Arrays im Applikator ist somit mit dem Hauptgerät über jeweils eine Signalleitung verbunden. Diese Signalleitungen werden zu einem Kabelstrang zusammengefaßt, der typischerweise ein bis drei Meter lang ist. Im Sendemodus muß deshalb nicht nur die Kapazität jedes Wandlerelements, die typischerweise einige 100 pF bei einem linearen Array beträgt, sondern auch die Kapazität der zugehörigen Signalleitung, die typischerweise 100 pF bis 300 pF beträgt, umgeladen werden. Im Empfangsmodus belastet die parasitäre Kapazität der Signalleitung die Empfangssignale des zugehörigen Wandlerelements und reduziert die Signalamplituden. Im allgemeinen muß die parasitäre Kapazität jeder Signalleitung von einem zugehörigen Empfangsverstärker im Hauptgerät induktiv kompensiert werden. Das wiederum reduziert aber die Bandbreite der verstärkten Empfangssignale.

Da die Empfangssignale im allgemeinen auch eine hohe Bandbreite von typischerweise bis 20 MHz aufweisen, können für die Signalleitungen nur spezielle, vergleichsweise kostenaufwendige Koaxialkabel mit geringer Dämpfung eingesetzt werden. Bei der vergleichsweise großen Zahl von Signalleitungen, beispielsweise 128, ist der Kabelstrang außerdem relativ schwer und steif und schränkt die Bewegung des Applikators ein.

Aus *WO 95/02197* ist ein Ultraschallabbildungssystem bekannt, bei dem die Anzahl der Leitungen zwischen Applikator und Hauptgerät reduziert ist. Der Applikator enthält neben einem Ultraschallarray von Wandlerelementen einen Adreßdecoder und für jedes Wandlerelement jeweils einen Sendepulsgeber. Der Adreßdecoder dekodiert digitale Adressen für die Sendepulsgeber, die vom Hauptgerät über Adreßleitungen zum Applikator übertragen werden. Die Startzeiten für die Sendepulse werden digital über den Wandlerelementen gemeinsame Startzeitleitungen (Datenbus) vom Hauptgerät zum Applikator übertragen. Ferner sind der Applikator und das Hauptgerät über einzelne Steuerleitungen und Versorgungsleitungen für den Sendefall verbunden. Die Anzahl der für den Sendemodus vorgesehenen Leitungen ist im allgemeinen deutlich kleiner als die Anzahl der Wandlerelemente. Leitungen für digitale Signale sind überdies einfach zu realisieren. Für den Empfangsfall sind im Applikator ein Multiplexer und im Hauptgerät ein Demultiplexer vorgesehen, die über Signalleitungen miteinander verbunden sind. Über jede Signalleitung wird jeweils eine Gruppe von gemultiplexten Empfangssignalen verschiedener Wandlerelemente übertragen. Die Übertragung der Empfangssignale kann über Frequenzmultiplexen oder auch Zeitmultiplexen geschehen. Die Anzahl der Empfangsleitungen ist somit gegenüber einer individuellen Verdrahtung der Wandlerelemente um den Multiplexfaktor des Multiplexverfahrens reduziert. Durch diese Maßnahmen ist die Anzahl der Leitungen zwischen Applikator und Hauptgerät insbesondere bei einem zweidimensionalen Array erheblich reduziert.

Aus *IEEE Ultrasonics Symposium 1994*, *Seiten 1519 bis 1522* ist ein optisches Übertragungssystem zum Übertragen der Sendepulse für ein Ultraschallwandlerelement bekannt. Ein TTL-Pulsgeber steuert eine Laserdiode zum Erzeugen von Laserpulsen. Diese Laserpulse werden über eine optische Lichtleitfaser zu einem photoleitenden Halbleiterschalter (PCSS) übertragen und von diesem in elektrische Sendepulse zum Anregen des Wandlerelements umgewandelt. Das Wandlerelement wird für ein zweidimensionales Ultraschallarray für die medizinische Diagnostik verwendet.

Ein Problem bei den bekannten Ultraschallgeräten stellen elektromagnetische Störungen der Empfangssignale (digital noise oder semi-random-spectrum) dar, die von außen oder von benachbarten Signalleitungen in die Signalleitungen eingekoppelt werden. Da die Amplituden der Empfangssignale aufgrund der Dämpfung im Objekt innerhalb eines Empfangsmodus kontinuierlich abnehmen mit einer Dynamik von typischerweise bis 120 dB, wirken sich diese Störungen besonders am Ende eines Empfangsmodus aus.

Der Erfindung liegt nun die Aufgabe zugrunde, ein Verfahren und eine Anordnung zum Abbilden eines Objekts mit Ultraschall nach der Puls-Echo-Methode anzugeben, bei denen die Empfangssignale der Wandlerelemente eines Arrays mit einer hohen Bandbreite und praktisch störungsfrei übertragen werden können.

Diese Aufgabe wird gemäß der Erfindung gelöst mit den Merkmalen des Anspruchs 1 bzw. des Anspruchs 14.

Bei dem Verfahren zum Abbilden eines Objekts mit Ultraschall gemäß Anspruch 1 werden mehrere, zu einem Array angeordnete Wandlerelemente in einem Sendemodus von einem Sendepulsgenerator jeweils zu einem zugehörigen Sendezeitpunkt mit einem zugehörigen elektrischen Sendepuls angesteuert zum Senden von auf das Objekt richtbarem Ultraschall. In einem auf den Sendemodus folgenden Empfangsmodus wandeln die Wandlerelemente des Arrays vom Objekt reflektierten Ultraschall in elektrische Empfangssignale um. Die Empfangssignale der Wandlerelemente werden optisch zu einer Signalverarbeitungseinheit übertragen und von der Signalverarbeitungseinheit zum Aufbau eines Bildes des Objekts verwendet. Unter einer optischen Übertragung wird dabei und im folgenden eine Übertragung von Licht aus einem Wellenlängenbereich von etwa 400 nm bis etwa 0,4 mm verstanden, also Licht aus dem sichtbaren Spektrum und dem Infrarotspektrum.

Die Anordnung zum Abbilden eines Objekts mit Ultraschall nach Anspruch 14 enthält ein Array von Wandlerelementen, einen Sendepulsgenerator, der zum Senden von auf das Objekt richtbarem Ultraschall in einem Sendemodus die Wandlerelemente des Arrays jeweils zu einem zugehörigen Sendezeitpunkt mit einem zugehörigen elektrischen Sendepuls ansteuert, und eine Signalverarbeitungseinheit zum Aufbau eines Bildes des Objekts aus Empfangssignalen, die die Wandlerelemente in wenigstens einem Empfangsmodus aus vom Objekt reflektiertem Ultraschall erzeugen. Die Anordnung enthält außerdem eine Übertragungseinrichtung zum Übertragen der Empfangssignale der Wandlerelemente zur Signalverarbeitungseinheit in Form optischer Signale.

Die optische Übertragung der Empfangssignale gegenüber einer Übertragung über elektrische Leitungen hat gleich mehrere Vorteile:
1. Die hohe intrinsische Bandbreite der Empfangssignale wird praktisch nicht reduziert, da die parasitären Kapazitäten der elektrischen Leitungen nicht mehr die Wandlerelemente belasten und eine optische Übertragung prinzipiell eine hohe Bandbreite aufweist.
2. Die optische Übertragung gewährleistet eine hohe elektromagnetische Verträglichkeit (EMV) auf. Äußere elektromagnetische Störungen der Empfangssignale sind deshalb praktisch eliminiert.
3. Das Überkoppeln verschiedener Empfangssignale aufeinander kann ohne besondere Abschirmmaßnahmen vermieden werden.
4. Die Beweglichkeit eines Applikators mit integriertem Ultraschallarray kann erhöht werden, da die aufwendigen und vergleichsweise unhandlichen Koaxialkabel für die Empfangssignale entfallen.

Vorteilhafte Ausgestaltungen und Weiterbildungen des Verfahrens und der Anordnung ergeben sich aus den jeweils abhängigen Ansprüchen.

In einer ersten Ausführungsform werden die Empfangssignale von der Übertragungseinrichtung mittels eines Zeitmultiplexverfahren übertragen. In einer anderen Ausführungsform werden die Empfangssignale dagegen mit Hilfe eines Frequenzmultiplexverfahrens übertragen. In beiden Fällen ist dann zum optischen Übertragen der Empfangssignale insbesondere nur noch ein optischer Kanal erforderlich.

Vorzugsweise wird zum Übertragen der Empfangssignale Licht aus dem Infrarot-Spektrum verwendet.

In einer besonders vorteilhaften Ausführungsform werden die Empfangssignale frei übertragen (optische Freistrahlübertragung). Es ist dann keine feste mechanische Verbindung zwischen dem Array und der Signalverarbeitungseinheit mehr erforderlich.

Die Empfangssignale können aber auch über wenigstens einen Lichtwellenleiter zu der Signalverarbeitungseinheit übertragen werden.

Die den einzelnen Wandlerelementen zugeordneten Sendezeitpunkte werden im allgemeinen von einem Sendezeitgeber bereitgestellt und dann zum Sendepulsgenerator übertragen.

In einer vorteilhaften Ausführungsform werden die Sendezeitpunkte ebenfalls als optische Signale vom Sendezeitgeber zum Sendepulsgenerator übertragen. Diese Ausführungsform ist besonders vorteilhaft, wenn der Sendepulsgenerator mit dem Array in einem Applikator integriert ist und der Sendezeitgeber sowie die Signalverarbeitungseinheit in einem Hauptgerät vorgesehen sind. Es sind dann zur Signalübertragung zwischen dem Applikator und dem Hauptgerät keine elektrischen Leitungen mehr erforderlich.

Auch die Sendezeitpunkte können mittels optischer Freistrahlübertragung oder auch mittels wenigstens eines Lichtwellenleiters übertragen werden.

In einer besonderen Ausführungsform werden die Sendezeitpunkte und die Empfangssignale über einen gemeinsamen, bidirektionalen Lichtwellenleiter übertragen. Die Sendezeitpunkte und die Empfangssignale können aber auch über verschiedene Lichtwellenleiter übertragen werden.

Zur weiteren Erläuterung der Erfindung wird auf die Zeichnung Bezug genommen, in deren
- FIG 1: ein prinzipieller Aufbau einer Anordnung zum Abbilden eines Objekts mit Ultraschall mit optischer Übertragung der Empfangssignale,
- FIG 2: eine Anordnung zum Abbilden eines Objekts mit Ultraschall mit optischer Übertragung der Empfangssignale und der Sendedaten und
- FIG 3: eine Ausführungsform der Übertragungseinrichtung zum optischen Übertragen der Empfangssignale und einer zugehörigen Signalverarbeitungseinheit
jeweils schematisch veranschaulicht sind. Einander entsprechende Teile sind mit denselben Bezugszeichen versehen.

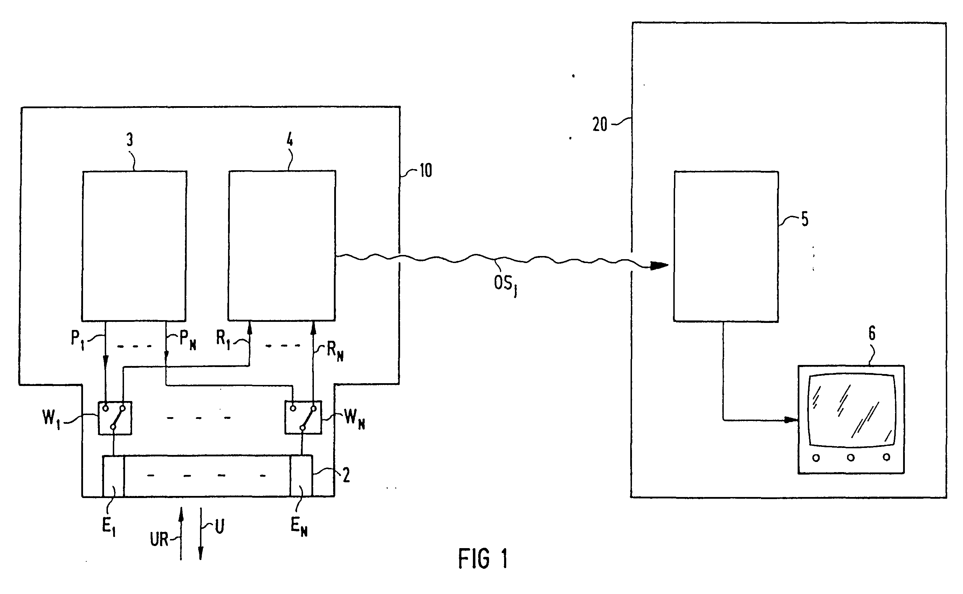

In FIG 1 sind ein Ultraschallarray mit 2, ein Sendepulsgenerator mit 3, eine Übertragungseinrichtung mit 4, eine Signalverarbeitungseinheit mit 5, ein Bildmonitor mit 6, ein Applikator mit 10 und ein Hauptgerät mit 20 bezeichnet.

Zum Abbilden eines nicht dargestellten Objekts wird eine vorgegebene Anzahl K ≥ 1 von Sende-Empfangs-Zyklen durchgeführt, die jeweils einen Sendemodus und einen Empfangsmodus umfassen.

In jedem Sendemodus sendet das Array 2 mit U bezeichneten Ultraschall auf das Objekt. Der Sendepulsgenerator 3 steuert dazu jedes Wandlerelement Ej des Arrays 2 mit einem zugehörigen elektrischen Sendepuls Pj für 1 ≤ j ≤ N an. N ist dabei die Anzahl der Wandlerelemente Eⱼ des Arrays 2. Jeder Sendepuls Pⱼ weist eine zugehörige Startzeit Tⱼ auf, die im folgenden als Sendezeitpunkt Tⱼ bezeichnet wird. Die Sendezeitpunkte Tj für die einzelnen Wandlerelemente Ej sind zeitlich derart zueinander versetzt, daß das Array 2 einen insbesondere fokussierbaren Ultraschallstrahl U zum Abtasten des Objekts erzeugt (phased array; zeitverzögertes Ansteuern). Im allgemeinen ist der Betrag der Pulsamplituden (Pulshöhen) der Sendepulse Pⱼ für alle Wandlerelemente Eⱼ gleich und liegt beispielsweise zwischen 100 V und 200 V. Auch die zeitliche Länge der einzelnen Sendepulse Pⱼ ist in der Regel gleich groß. Die Wandlerelemente Eⱼ können allerdings auch zur Apodisierung des Arrays 2 unterschiedlich stark angeregt werden. Es sind dann Sendepulse Pj unterschiedlicher Form, insbesondere unterschiedlicher Pulshöhen und unterschiedlicher Polarität, vorgesehen.

Sobald der letzte Sendepuls Pj vom Sendepulsgenerator 3 gesendet worden ist, wird vom Sendemodus in einen Empfangsmodus umgeschaltet. Zum Umschalten zwischen Sendemodus und Empfangsmodus ist für jedes Wandlerelement Ej des Arrays 2 jeweils ein Duplexer Wⱼ vorgesehen, der das zugehörige Wandlerelement Ej im Sendemodus mit dem Sendepulsgenerator 3 und im Empfangsmodus mit der Übertragungseinrichtung 4 elektrisch verbindet. In der FIG 1 sind die Duplexer W₁ bis W_{N} im Betriebszustand für den Empfangsmodus dargestellt. Im Empfangsmodus trifft nun vom Objekt, beispielsweise an Grenzflächen von Medien unterschiedlicher akustischer Impedanz, reflektierter Ultraschall auf das Array 2 und erzeugt in den Wandlerelementen Eⱼ elektrische Spannungen, die als elektrische Empfangssignale Rj ausgelesen werden können. Diese Empfangssignale Rj werden der Signalverarbeitungseinheit 5 zugeführt. Die Signalverarbeitungseinheit 5 baut aus den Empfangssignalen Rj aller K Empfangsmoden der K Sende-Empfangs-Zyklen ein Bild des Objekts auf, das auf dem Monitor 6 dargestellt werden kann.

Zum Übertragen der Empfangssignale Rj zur Signalverarbeitungseinheit 5 ist eine Übertragungseinrichtung 4 vorgesehen. Die Übertragungseinrichtung 4 wandelt die elektrischen Empfangssignale Rj in entsprechende optische Signale OSⱼ um, die die Signalinformationen der elektrischen Empfangssignale Rj enthalten und zur Signalverarbeitungseinheit 5 übertragen werden. Die Signalverarbeitungseinheit 5 wandelt die optischen Signale OSⱼ vorzugsweise wieder in elektrische Signale um, die bezüglich ihrer Signalinformationen den ursprünglichen Empfangssignalen Rj entsprechen, und verarbeitet diese elektrischen Signale weiter zum Aufbau eines Bildes des Objekts.

Die optische Übertragung der Empfangssignale Rⱼ in Form der optischen Signale OSⱼ ist vorzugsweise eine Freistrahlübertragung. Bei einer Freistrahlübertragung werden die optischen Signale OSⱼ von der Übertragungseinrichtung 4 ausgestrahlt und breiten sich in dem die Übertragungseinrichtung 4 umgebenden optischen Medium, beispielsweise in dem Raum, in dem sich das Objekt und die untersuchende Person befinden, frei aus. In dieser vorteilhaften Ausführungsform können zur optischen Übertragung der Empfangssignale Rj der Wandlerelemente Eⱼ schnurlose optische Übertragungssysteme verwendet werden.

Die optischen Signale OSj können aber auch über wenigstens einen Lichtwellenleiter wie beispielsweise eine optische Faser übertragen werden. In dieser Ausführungsform wird das Licht geführt übertragen und nicht frei.

Für die optischen Signale OSⱼ wird vorzugsweise Licht aus dem Infrarot-Spektrum verwendet, das von Wellenlängen von etwa 800 nm bis zu Wellenlängen von etwa 0,4 mm reicht. Als elektrooptische Einrichtung kann dann ein Laser oder eine Laserdiode mit einer Trägerfrequenz im Infrarotbereich vorgesehen sein.

Die elektrischen Empfangssignale Rj der Wandlerelemente Ej werden im allgemeinen im Applikator 10 von nicht dargestellten Vorverstärkern elektrisch verstärkt und vorzugsweise auch mit Hilfe von steuerbaren Verstärkern (Time-Gain-Amplifier) einer Dynamikkompression unterzogen, bevor sie der Übertragungseinrichtung 4 zugeführt werden.

Die Übertragungseinrichtung 4 ist mit dem Array 2 und den Duplexern Wⱼ in dem Applikator (Wandlerkopf) 10 integriert. Der Applikator 10 kann insbesondere mit der Hand über ein abzubildendes Objekt geführt werden. Die Signalverarbeitungseinheit 5 und der Monitor 6 sind dagegen Bestandteile eines Hauptgeräts (main frame) 20. Die Empfangssignale Rⱼ werden also in Form der optischen Signale OSj vom Applikator 10 zum Hauptgerät 20 übertragen. Dadurch sind zur Übertragung der Empfangssignale Rⱼ vom Applikator 10 zum Hauptgerät 20 im Gegensatz zum Stand der Technik keine elektrischen Leitungen mehr erforderlich mit den bereits erwähnten erheblichen Vorteilen.

In der in FIG 1 dargestellten Ausführungsform ist auch der Sendepulsgenerator 3 in dem Applikator 10 integriert. Der Sendepulsgenerator 3 kann in einer besonderen Ausführungsform alle Sendedaten, insbesondere die Sendezeitpunkte Tⱼ und die Sendeamplituden für die elektrischen Sendepulse Pⱼ, für den Sendemodus selbst generieren und zusätzlich auch die Steuerung der Sende-Empfangs-Zyklen übernehmen. Zur Synchronisation der Sende-Empfangszyklen sendet der Sendepulsgenerator 3 dann vorzugsweise über den für die optischen Signale OSⱼ vorgesehenen optischen Kanal Steuersignale zum Hauptgerät 20. Darüber hinaus ist in dieser besonderen Ausführungsform für den Sendemodus keine zusätzliche Verbindung zwischen Hauptgerät 20 und dem Sendepulsgenerator 3 im Applikator 10 mehr erforderlich. Zur Stromversorgung des Sendepulsgenerators 3 und der Übertragungseinrichtung 4 ist im Applikator 10 in dieser Ausführungsform vorzugsweise eine Batterie oder ein wiederaufladbarer Akkumulator vorgesehen.

Die Sendedaten (Sendezeitpunkte und gegebenenfalls auch Sendepulsamplituden) können aber auch im Hauptgerät 20 erzeugt werden und entweder als elektrische Signale über elektrische Leitungen, insbesondere als digitale Signale über wenigstens einen Datenbus, oder auch in Form optischer Signale zum Sendepulsgenerator 3 im Applikator 10 übertragen werden.

Ferner können im Hauptgerät 20 beispielsweise mit einem Laser optische Triggerpulse als Startflanken für die Sendepulse Pⱼ erzeugt werden und vorzugsweise mittels eines Lichtwellenleiters zum Sendepulsgenerator 3 übertragen werden. Der Sendepulsgenerator 3 erzeugt dann aus diesen optischen Triggerpulsen die elektrischen Sendepulse Pⱼ für die Wandlerelemente Eⱼ. Für diese Ausführungsform der Sendepulserzeugung kann insbesondere die eingangs erwähnte, aus *IEEE Ultrasonics Symposium 1994*, *Seiten 1519 bis 1522* bekannte optische Übertragungseinrichtung verwendet werden.

Schließlich kann der Sendepulsgenerator 3 auch im Hauptgerät 20 integriert werden. Das Hauptgerät 20 und der Applikator 10 sind dann über N elektrische Leitungen zum Übertragen der elektrischen Sendepulse Pⱼ elektrisch verbunden.

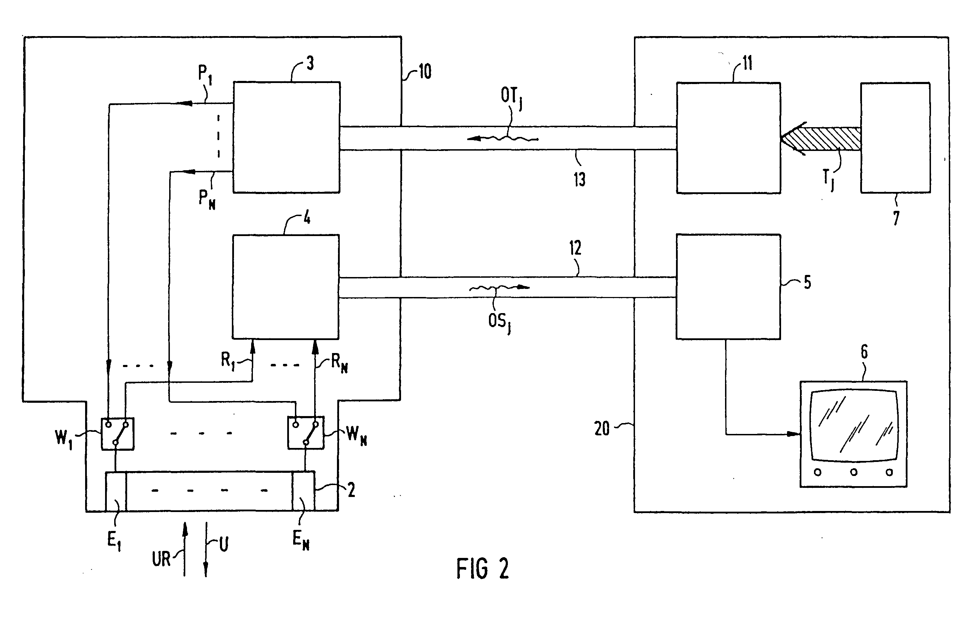

Die FIG 2 zeigt eine vorteilhafte Ausführungsform einer Anordnung zum Abbilden eines Objekts mit Ultraschall, bei der sowohl die Empfangssignale als auch die Sendedaten optisch übertragen werden. Die Empfangssignale Rⱼ der Wandlerelemente Ej werden von der Übertragungseinrichtung 4 in zugehörige optische Signale OSj umgewandelt. Diese optischen Signale OSⱼ koppelt die Übertragungseinrichtung 4 in einen Lichtwellenleiter 12 ein, der die Übertragungseinrichtung 4 mit der Signalverarbeitungseinheit 5 optisch verbindet. Über den Lichtwellenleiter 12 werden die optischen Signale OSj der Signalverarbeitungseinheit 5 zugeführt und von der Signalverarbeitungseinheit 5 zum Bildaufbau verarbeitet. Die optischen Signale OSj können aber auch wieder frei, d.h. ohne Lichtwellenleiter 12, übertragen werden.

Für den Sendemodus ist ein im Hauptgerät 20 angeordneter Sendezeitgeber 7 dargestellt, der die Sendezeitpunkte Tj für die Sendepulse Pⱼ als analoge oder digitale Signale erzeugt. Bei einem analogen Signal ist der zugehörige Sendezeitpunkt Tⱼ in der Amplitude (amplitudenanalog) oder Zeit (zeitanalog) kodiert, während bei einem digitalen Signal der Sendezeitpunkt Tⱼ als binär kodiertes Datenwort (Bit-Muster) übertragen wird. Im Hauptgerät 20 ist ferner eine weitere Übertragungseinrichtung 11 zum optischen Übertragen dieser Sendezeitpunkte Tⱼ zum Sendepulsgenerator 3 vorgesehen. Die weitere Übertragungseinrichtung 11 wandelt die vom Sendezeitgeber 7 erhaltenen Sendezeitpunkte Tⱼ durch eine Intensitätsmodulation von Licht einer nicht dargestellten Lichtquelle, beispielsweise eines Lasers oder einer Laserdiode, in optischen Signale OTⱼ um, die ebenfalls analoge oder digitale optische Signale sein können. Bei analogen optischen Signalen OTⱼ sind die Informationen über die Sendezeitpunkte Tⱼ in kontinuierlich veränderlichen optischen Signalamplituden (Lichtintensitäten) enthalten (analoge Intensitätsmodulation), bei digitalen optischen Signalen dagegen in einer Folge optischer Bits (digitale Intensitätsmodulation). Jedes optische Bit kann dabei entweder einen ersten Zustand mit einer ersten vorgegebenen Lichtintensität oder einen zweiten Zustand mit einer zweiten, von der ersten verschiedenen Lichtintensität annehmen.

Die optischen Signale OTⱼ werden über einen Lichtwellenleiter 13, der die weitere Übertragungseinrichtung 11 im Hauptgerät 20 mit dem Sendepulsgenerator 3 im Applikator 10 optisch koppelt, zum Sendepulsgenerator 3 seriell übertragen. Alternativ können die optischen Signale OTⱼ für die Sendezeitpunkte Tⱼ auch frei, d.h. ohne Lichtwellenleiter 13 übertragen werden. Schließlich können auch mehrere Sendezeitpunkte Tⱼ parallel über mehrere Lichtwellenleiter und/oder spektral parallel im Wellenlängenmultiplexverfahren (Wavelength Division Multiplex) übertragen werden. Der Sendepulsgenerator 3 enthält einen photoelektrischen Wandler zum Umwandeln der optischen Signale OTⱼ in elektrische Signale, die den ursprünglichen Sendezeitpunkten Tj entsprechen, und einen Speicher zum Speichern dieser den Sendezeitpunkten Tⱼ entsprechenden Signale für einen kommenden Sendemodus. In diesem Sendemodus sendet der Sendepulsgenerator 3 an jedes Wandlerelement Ej zu dem zugehörigen, gespeicherten Sendezeitpunkt Tⱼ einen elektrischen Sendepuls Pj.

Außer den Sendezeitpunkten Tj können auch andere Sendedaten wie Pulsamplituden für die Sendepulse Pⱼ optisch von der Übertragungseinrichtung 11 zum Sendepulsgenerator 3 übertragen werden, beispielsweise zum Apodisieren des Arrays 2.

Zur Stromversorgung der Komponenten im Applikator 10 kann im Hauptgerät 20 eine nicht dargestellte Stromversorgungseinheit vorgesehen sein, die mit dem Applikator 10 über ein elektrisches Kabel verbunden ist. In einer besonderen Ausführungsform können die elektrischen Komponenten im Applikator 10 auch von einer optischen Einheit, beispielsweise einem Laser, im Hauptgerät 20 über einen Lichtwellenleiter und einen im Applikator 10 vorgesehenen photoelektrischen Wandler mit Strom versorgt werden. Es ist dann keine elektrische Verbindung von Applikator 10 und Hauptgerät 20 mehr erforderlich. Signale und Energie werden rein optisch übertragen.

In einer besonders vorteilhaften Ausführungsform ist im Applikator 10 zur Stromversorgung eine Batterie oder ein Akkumulator vorgesehen. In Kombination mit einer Freistrahlübertragung der Sendedaten und der Empfangssignale Rj ist der Applikator 10 dann in seiner Beweglichkeit vollkommen unabhängig vom Hauptgerät 20, da es keine mechanische Verbindung über elektrische oder optische Kabel zwischen Applikator 10 und Hauptgerät 20 mehr gibt.

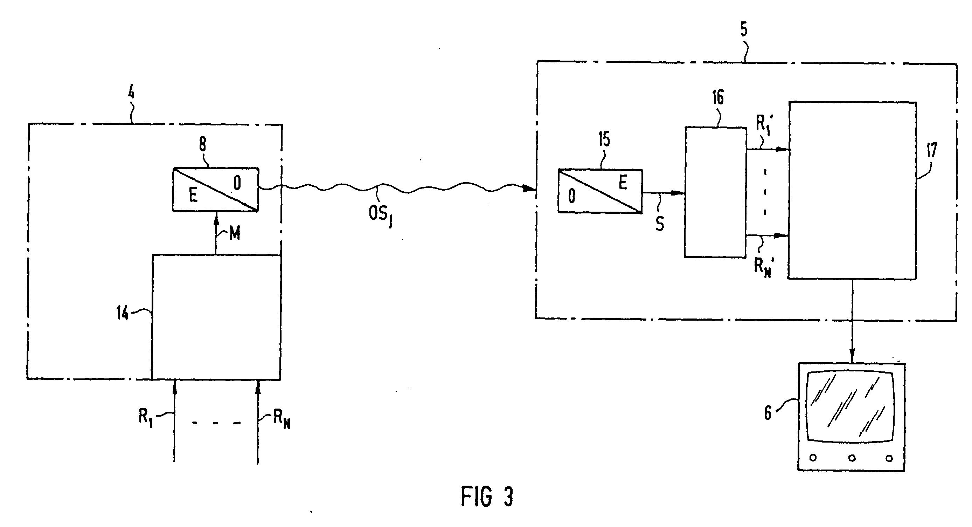

In FIG 3 ist ein Ausführungsbeispiel der Übertragungseinrichtung 4 zum optischen Übertragen der Empfangssignale Rⱼ und der Signalverarbeitungseinheit 5 zum Verarbeiten der Empfangssignale Rj dargestellt. Die Übertragungseinrichtung 4 enthält einen elektrooptischen Wandler 8, vorzugsweise einen Laser oder eine Laserdiode, als optischen Sender und einen Modulator 14 zum Modulieren der Lichtintensität des vom elektrooptischen Wandler 8 abgegebenen Lichts. Das Licht des elektrooptischen Wandlers 8 liegt in einem optischen Kanal, der eine vorgegebene optische Bandbreite von beispielsweise wenigstens 1000 MHz aufweist. Der Modulator 14 ist mit jedem in FIG 3 nicht dargestellten Wandlerelement Ej des Arrays 2 über den zugehörigen Duplexer Wj elektrisch verbindbar und mit dem elektrooptischen Wandler 8 elektrisch verbunden. Im Empfangsmodus faßt der Modulator 14 die N elektrischen Empfangssignale Rⱼ der Wandlerelemente Eⱼ mittels eines N:1-Multiplexverfahrens in einem elektrischen Multiplexsignal als elektrisches Modulationssignal M zusammen, das die Signalinformationen sämtlicher elektrischer Empfangssignale Rⱼ enthält. Mit diesem Modulationssignal M moduliert der Modulator 14 die Intensität des Lichts des elektrooptischen Wandlers 8. Die den einzelnen elektrischen Empfangssignalen Rj der Wandlerelemente Ej entsprechenden optischen Signale OSj sind somit in dem gemäß dem Modulationssignal M des Modulators 14 intensitätsmodulierten Licht auf den optischen Kanal des elektrooptischen Wandlers 8 zusammengefaßt ("gemultiplext").

Als Multiplexverfahren für den Modulator 14 kann ein Zeitmultiplexverfahren (TDMA = Time Division Multiple Access) oder auch ein Frequenzmultiplexverfahren (FDMA = Frequency Division Multiple Access) verwendet werden. Elektrische Zeitmultiplex- und Frequenzmultiplexverfahren sind beispielsweise aus dem Buch *Meinke*, *Gundlach*, *"Taschenbuch der Hochfrequenztechnik*", *4*. *Auflage, Springer-Verlag (1986)*, *Seiten O51 bis O54 und R1 bis* R2 bekannt, dessen Offenbarung in den Inhalt der vorliegenden Anmeldung miteinbezogen wird.

Beim Zeitmultiplexen werden die elektrischen Empfangssignale Rj von einem Zeitmultiplexer beispielsweise mit Hilfe von elektronischen Schaltern sequentiell abgetastet und die Abtastwerte zu einem Zeitmultiplexsignal auf einen elektrischen Signalweg zusammengefaßt. Dieses elektrische Zeitmultiplexsignal wird dann als Modulationssignal M zur Intensitätsmodulation des Lichts des elektrooptischen Wandlers 8 verwendet. Die vom elektrooptischen Wandler 8 gesendeten optischen Signale OSⱼ setzen sich also aus zeitlich aufeinanderfolgenden, gemäß den einzelnen Abtastwerten der Empfangssignale Rⱼ in ihrer Intensität modulierten Lichtsignalen zusammen, die seriell über den optischen Kanal des elektrooptischen Wandlers 8 übertragen werden. Die Abtastzeit für einen Abtastwert eines Empfangssignals Rj beträgt im allgemeinen höchstens 1/(2·N·fₘₐₓ) mit der maximalen Frequenz fₘₐₓ der Empfangssignale Rj. Durch spektrale Verschachtelungen kann die Abtastzeit günstigenfalls bis auf 1/(2·N·B) reduziert werden, wenn B die Bandbreite der Empfangssignale Rj ist.

Beim Frequenzmultiplexen werden die Empfangssignale Rⱼ zeitlich parallel auf verschiedene Frequenzbänder aufgeteilt. Der Modulator 14 faßt hierfür die N einzelnen elektrischen Empfangssignale Rj mit jeweils der Bandbreite B in ein elektrisches Frequenzmultiplexsignal als Modulationssignal M zusammen, das eine Gesamtbandbreite von N·B' aufweist. Jedes Empfangssignal Rⱼ wird dabei in ein zugeordnetes Frequenzband mit der Bandbreite B' transformiert. Die Bandbreite B' hängt vom verwendeten Frequenzmultiplexverfahren ab. Insbesondere kann für den Modulator 14 ein Frequenzmultiplexer mit einem Ein-Seiten-Band-Verfahren (ESB), einem Amplitudenmodulations-Verfahren (AM) oder auch einem Frequenzmodulations-Verfahren (FM) verwendet werden. Mit dem erhaltenen elektrischen Frequenzmultiplexsignal als Modulationssignal M moduliert der Modulator 14 nun die Lichtintensität des elektrooptischen Wandlers 8.

Die Intensitätsmodulation des Lichts des elektrooptischen Wandlers 8 durch den Modulator 14 kann sowohl bei einem Zeitmultiplexverfahren als auch bei Frequenzmultiplexverfahren analog oder digital erfolgen. Analoge und digitale optische Übertragungssysteme sind beispielsweise aus dem bereits genannten Buch *Meinke*, *Gundlach*, *"Taschenbuch der Hochfrequenztechnik"*, *4*. *Auflage, Springer-Verlag (1986)*, *Seiten R59 bis R72* bekannt, dessen Offenbarung in den Inhalt der vorliegenden Anmeldung miteinbezogen wird.

Bei einer analogen optischen Übertragung ist das Modulationssignal M ein analoges Signal mit einer kontinuierlich veränderbaren Amplitude. Das intensitätsmodulierte Licht des elektrooptischen Wandlers 8 folgt dann dem analogen Modulationssignal M. Die optischen Signale OSj sind dann analoge Lichtsignale, das heißt sie weisen eine sich analog (kontinuierlich) verändernde Lichtleistung (Lichtintensität) auf.

Bei einer digitalen optischen Übertragung wird das elektrische Zeitmultiplexsignal oder Frequenzmultiplexsignal im Modulator 14 von einem dem Zeitmultiplexer bzw. Frequenzmultiplexer nachgeschaltetem seriellen Analog/Digital-Wandler in seiner Amplitude digitalisiert (quantisiert, diskretisiert). Das digitalisierte Zeitmultiplexsignal bzw. Frequenzmultiplexsignal wird nun als digitales elektrisches Modulationssignal M des Modulators 14 dem elektrooptischen Wandler 8 zugeführt. Dieses digitale Modulationssignal M besteht aus einer Folge von binären Pulsen (Bits), die einen von zwei definierten Zuständen annehmen können. Eine Gruppe von K Bits bildet ein Datenwort, das einem Amplitudenwert des analogen Zeitmultiplexsignals bzw. Frequenzmultiplexsignals im Rahmen der durch die Zahl K der Bits vorgegebenen Auflösung entspricht. Mit diesem digitalen Modulationssignal M wird das Licht des elektrooptischen Wandlers 8 intensitätsmoduliert. Die optischen Signale OSⱼ des elektrooptischen Wandlers 8 liegen somit als digitale optische Signale vor, d.h. als optische binäre Impulsfolge, die seriell übertragen werden. Die maximale Übertragungszeit zum Übertragen eines optischen Bits der optischen Signale OSⱼ beträgt bei einem Zeitmultiplexverfahren 1/ (2·N·K·fₘₐₓ) und bei spektraler Verschachtelung bestenfalls 1/(2·N·K·B) und bei einem Frequenzmultiplexverfahren 1/ (2N·K·B').

Das intensitätsmodulierte Licht des elektrooptischen Wandlers 8 mit den optischen Signale OSⱼ wird nun frei oder über wenigstens einen Lichtleiter zu einem optoelektrischen Wandler 15, beispielsweise einer Photodiode, in der Signalverarbeitungseinheit 5 übertragen. Der optoelektrische Wandler 15 wandelt die vom elektrooptischen Wandler 8 in der Übertragungseinrichtung 4 kommenden intensitätsmodulierten optischen Signale OSⱼ in ein entsprechend moduliertes elektrisches Signal S um, das die Signalinformationen aller optischen Signale OSⱼ und damit aller Empfangssignale Rⱼ der Wandlerelemente Eⱼ enthält.

Ein Demodulator 16 in der Signalverarbeitungseinheit 5 trennt nun das umgewandelte elektrische Signal S in N einzelne elektrische Auswertesignale R₁' bis R_{N}' auf, die bezüglich ihrer Signalinformation den ursprünglichen Empfangssignalen R₁ bis R_{N} der Wandlerelemente E₁ bis E_{N} entsprechen und insbesondere in ihren Signalamplituden proportional zu den ursprünglichen Empfangssignalen R₁ bis R_{N} sind. Dazu enthält der Demodulator 16 einen 1:N-Demultiplexer. Als 1:N-Demultiplexer ist insbesondere ein Zeitdemultiplexer vorgesehen, wenn in der Übertragungseinrichtung 4 ein Zeitmultiplexer im Modulator 14 vorgesehen ist, zum zeitlichen Trennen der Signalanteile der Empfangssignale Rⱼ voneinander oder ein Frequenzdemultiplexer, wenn im Modulator 14 ein Frequenzmultiplexer vorhanden ist, zum spektralen Trennen der Signalanteile der Empfangssignale Rⱼ in Einzelkanäle und spektralen Rückversetzen der Empfangssignale Rⱼ in ihr Basisband B. Der Zeitdemultiplexer bzw. Frequenzdemultiplexer ist dabei auf den entsprechenden Zeitmultiplexer bzw. Frequenzmultiplexer in der Übertragungseinrichtung 4 abgestimmt. Im Falle einer analogen optischen Übertragung mit analogen optischen Signalen OSⱼ wird das umgewandelte elektrische Signal S des optoelektrischen Wandlers 15 als analoges Signal direkt dem 1:N-Demultiplexer, also insbesondere dem Zeitdemultiplexer bzw. dem Frequenzdemultiplexer, zugeführt. Bei einem digitalen optischen Übertragungsverfahren wird das digitale elektrische Signal S des optoelektrischen Wandlers 15 dagegen zunächst von einem seriellen Digital/Analog-Wandler in dem Demodulator 16 in ein analoges Signal umgewandelt und das D/A-gewandelte, analoge elektrische Signal S wird dann dem 1:N-Demultiplexer zugeführt.

Die elektrischen Auswertesignale Rⱼ' werden über jeweils einen zugeordneten Ausgang des 1:N-Demultiplexers einer Bildaufbaueinheit 17 in der Signalverarbeitungseinheit 5 zugeführt, die die elektrischen Auswertesignale Rⱼ' zum Aufbau eines Bildes des Objekts auf dem Monitor 6 verwendet.

In den bisher beschriebenen Ausführungsformen wurde zum optischen Übertragen der Empfangssignale Rj und der Sendezeitpunkte Tⱼ jeweils nur intensitätsmoduliertes Licht verwendet. Es ist jedoch prinzipiell auch möglich, frequenzmoduliertes oder phasenmoduliertes Licht für die optischen Signale OSⱼ bzw. OTⱼ zu verwenden. Allerdings sind solche optischen Übertragungssysteme vergleichsweise aufwendig.

Das Array 2 kann in allen Ausführungsformen insbesondere ein eindimensionales oder auch ein zweidimensionales Array sein.

## Patentansprüche

1. Verfahren zum Abbilden eines Objekts mit Ultraschall, bei dem
a) mehrere, zu einem Array (2) angeordnete Wandlerelemente (Ej)
a1) in einem Sendemodus jeweils zu einem zugehörigen Sendezeitpunkt (Tⱼ) von einem Sendepulsgenerator (3) mit einem zugehörigen elektrischen Sendepuls (Pj) angesteuert werden zum Senden von auf das Objekt richtbarem Ultraschall und
a2) in einem auf den Sendemodus folgenden Empfangsmodus vom Objekt reflektierten Ultraschall in elektrische Empfangssignale (Rⱼ) umwandeln;
b) die Empfangssignale (Rⱼ) der Wandlerelemente (Ej)
b1) optisch mit einer optischen Bandbreite von wenigstens 1000 MHz zu einer Signalverarbeitungseinheit (5) übertragen werden und
b2) von der Signalverarbeitungseinheit (5) zum Aufbau eines Bildes des Objekts verwendet werden.

2. Verfahren nach Anspruch 1, bei dem zum optischen Übertragen der Empfangssignale (Rⱼ) ein Zeitmultiplexverfahren verwendet wird.

3. Verfahren nach Anspruch 1, bei dem zum optischen Übertragen der Empfangssignale (Rⱼ) ein Frequenzmultiplexverfahren verwendet wird.

4. Verfahren nach einem der vorhergehenden Ansprüche, bei dem zum Übertragen der Empfangssignale (Rⱼ) Licht aus dem Infrarot-Spektrum verwendet wird.

5. Verfahren nach einem der vorhergehenden Ansprüche, bei dem die Empfangssignale (Rⱼ) frei übertragen werden.

6. Verfahren nach einem der Ansprüche 1 bis 4, bei dem die Empfangssignale (Rj) über wenigstens einen Lichtwellenleiter (12) übertragen werden.

7. Verfahren nach einem der vorhergehenden Ansprüche, bei dem die Empfangssignale (Rj) in Form digitaler optischer Signale (OSⱼ) übertragen werden.

8. Verfahren nach einem der Ansprüche 1 bis 6, bei dem die die Empfangssignale (Rj) in Form analoger optischer Signale (OSj) übertragen werden.

9. Verfahren nach einem der vorhergehenden Ansprüche, bei dem die für die Sendepulse (Pⱼ) vorgesehenen Sendezeitpunkte (Tⱼ) von einem Sendezeitgeber (7) bereitgestellt werden und vom Sendezeitgeber (7) optisch zum Sendepulsgenerator (3) übertragen werden.

10. Verfahren nach Anspruch 9, bei dem zum Übertragen der Sendezeitpunkte (Tⱼ) Licht aus dem Infrarot-Spektrum verwendet wird.

11. Verfahren nach Anspruch 9 oder Anspruch 10, bei dem die Sendezeitpunkte (Tⱼ) frei übertragen werden.

12. Verfahren nach Anspruch 9 oder Anspruch 10, bei dem die Sendezeitpunkte (Tⱼ) über wenigstens einen Lichtwellenleiter (13) übertragen werden.

13. Verfahren nach Anspruch 6 und Anspruch 12, bei dem die Sendezeitpunkte (Tj) und die Empfangssignale (Rⱼ) über einen gemeinsamen Lichtwellenleiter übertragen werden.

14. Anordnung zum Abbilden eines Objekts mit Ultraschall mit
a) einem Array (2) von Wandlerelementen (Eⱼ),
b) einem Sendepulsgenerator (3), der die Wandlerelemente (Eⱼ) des Arrays (2) jeweils zu einem zugehörigen Sendezeitpunkt (Tⱼ) mit einem zugehörigen elektrischen Sendepuls (Pⱼ) ansteuert zum Senden von auf das Objekt richtbarem Ultraschall,
c) einer Signalverarbeitungseinheit (5) zum Aufbau eines Bildes des Objekts aus Empfangssignalen (Rⱼ), die von den Wandlerelementen (Eⱼ) aus vom Objekt reflektiertem Ultraschall erzeugt werden, und mit
d) einer Übertragungseinrichtung (4) mit einer optischen Bandbreite von wenigstens 1000 MHz zum Übertragen der Empfangssignale (Rj) zur Signalverarbeitungseinheit (5) in Form optischer Signale (OSⱼ).

15. Anordnung nach Anspruch 14, bei der die Übertragungseinrichtung (4) einen Zeitmultiplexer und die Signalverarbeitungseinheit (5) einen Zeitdemultiplexer zum Übertragen der Empfangssignale (Rj) in einem Zeitmultiplexverfahren enthalten.

16. Anordnung nach Anspruch 14, bei der die Übertragungseinrichtung (4) einen Frequenzmultiplexer und die Signalverarbeitungseinheit (5) einen Frequenzdemultiplexer zum Übertragen der Empfangssignale (Rⱼ) in einem Frequenzmultiplexverfahren enthalten.

17. Anordnung nach einem der Ansprüche 14 bis 16, bei der die Übertragungseinrichtung (4) die Empfangssignale (Rj) in Form von Licht aus dem Infrarot-Spektrum überträgt.

18. Anordnung nach einem der Ansprüche 14 bis 17, bei der die Übertragungseinrichtung (4) die optischen Signale (OSⱼ) frei zur Signalverarbeitungseinheit (5) überträgt.

19. Anordnung nach einem der Ansprüche 14 bis 17, bei der die Übertragungseinrichtung (4) über wenigstens einen Lichtwellenleiter (12) mit der Signalverarbeitungseinheit (5) optisch gekoppelt ist zum Übertragen der optischen Signale (OSⱼ).

20. Anordnung nach einem der Ansprüche 14 bis 19, bei der die Übertragungseinrichtung (4) die Empfangssignale (Rⱼ) in Form analoger optischer Signale (OSⱼ) überträgt.

21. Anordnung nach einem der Ansprüche 14 bis 19, bei der die Übertragungseinrichtung (4) die Empfangssignale (Rⱼ) in Form digitaler optischer Signale (OSⱼ) überträgt.

22. Anordnung nach einem der Ansprüche 14 bis 21 mit
a) wenigstens einem Sendezeitgeber (7) zum Bereitstellen der Sendezeitpunkte (Tⱼ) für die Sendepulse (Pⱼ) und mit
b) einer weiteren Übertragungseinrichtung (11) zum Übertragen der Sendezeitpunkte (Tⱼ) vom Sendezeitgeber (4) zum Sendepulsgenerator (3) in Form optischer Signale (OTⱼ).

23. Anordnung nach Anspruch 22, bei der die weitere Übertragungseinrichtung (11) die Sendezeitpunkte (Tⱼ) in Form von Licht aus dem Infrarot-Spektrum überträgt.

24. Anordnung nach einem der Ansprüche 22 oder 23, bei der die weiteren Übertragungseinrichtung (11) über wenigstens einen Lichtwellenleiter (13) mit dem Sendepulsgenerator (3) optisch gekoppelt ist zum Übertragen der Sendezeitpunkte (Tⱼ).

25. Anordnung nach Anspruch 24, bei der ein gemeinsamer, bidirektionaler Lichtwellenleiter zum Übertragen sowohl der Sendezeitpunkte (Tⱼ) als auch der Empfangssignale (Rⱼ) vorgesehen ist.

26. Anordnung nach einem der Ansprüche 23 oder 24, bei der die weitere Übertragungseinrichtung (11) die Sendezeitpunkte (Tⱼ) in Freistrahlübertragung überträgt.

27. Anordnung nach einem der Ansprüche 14 bis 26, bei der das Array (2), der Sendepulsgenerator (3) und die Übertragungseinrichtung (4) zum optischen Übertragen der Empfangssignale (Rⱼ) in einem Applikator (10) integriert sind und der Sendezeitgeber (7) und die Signalverarbeitungseinheit (5) in einem Hauptgerät (20) integriert sind.

## Claims

1. Method for imaging an object with ultrasound, in which
a) a plurality of transducer elements (Eⱼ) arranged to form an array (2)
a1) are, in a sending mode, in each case at an associated sending instant (Tⱼ), triggered by a sending-pulse generator (3) with an associated electrical sending pulse (Pⱼ) to send ultrasound which can be directed on to the object, and
a2) in a receiving mode which follows on from the sending mode, convert ultrasound reflected by the object into electrical received signals (Rⱼ) ;
b) the received signals (Rⱼ) of the transducer elements (Eⱼ)
b1) are transmitted optically with an optical bandwidth of at least 1000 MHz to a signal-processing unit (5), and
b2) are used by the signal-processing unit (5) to construct an image of the object.

2. Method according to claim 1, in which a time-division multiplex method is used for the optical transmission of the received signals (Rⱼ).

3. Method according to claim 1, in which a frequency-division multiplex method is used for the optical transmission of the received signals (Rⱼ).

4. Method according to one of the preceding claims, in which light from the infrared spectrum is used for the transmission of the received signals (Rⱼ).

5. Method according to one of the preceding claims, in which the received signals (Rⱼ) are transmitted freely.

6. Method according to one of claims 1 to 4, in which the received signals (Rⱼ) are transmitted by way of at least one optical waveguide (12).

7. Method according to one of the preceding claims, in which the received signals (Rⱼ) are transmitted in the form of digital optical signals (OSⱼ).

8. Method according to one of claims 1 to 6, in which the received signals (Rⱼ) are transmitted in the form of analog optical signals (OSⱼ).

9. Method according to one of the preceding claims, in which the sending instants (Tⱼ) provided for the sending pulses (Pⱼ) are provided by a sending-time transmitter (7) and are transmitted optically from the sending-time transmitter (7) to the sending-pulse generator (3).

10. Method according to claim 9, in which light from the infrared spectrum is used for the transmission of the sending instants (Tⱼ).

11. Method according to claim 9 or claim 10, in which the sending instants (Tⱼ) are transmitted freely.

12. Method according to claim 9 or claim 10, in which the sending instants (Tⱼ) are transmitted by way of at least one optical waveguide (13).

13. Method according to claim 6 and claim 12, in which the sending instants (Tⱼ) and the received signals (Rⱼ) are transmitted by way of a common optical waveguide.

14. Arrangement for imaging an object with ultrasound having
a) an array (2) of transducer elements (Eⱼ),
b) a sending-pulse generator (3) which triggers the transducer elements (Eⱼ) of the array (2), in each case at an associated sending instant (Tⱼ), with an associated electrical sending pulse (Pⱼ) to send ultrasound which can be directed on to the object,
c) a signal-processing unit (5) for constructing an image of the object from received signals (Rⱼ) which are generated by the transducer elements (Eⱼ) from ultrasound reflected by the object, and having
d) a transmitting device (4) having an optical bandwidth of at least 1000 MHz for transmitting the received signals (Rⱼ) to the signal-processing unit (5) in the form of optical signals (OSⱼ).

15. Arrangement according to claim 14, in which the transmitting device (4) contains a time-division multiplexer and the signal-processing unit (5) contains a time-division demultiplexer for transmitting the received signals (Rⱼ) in a time-division multiplex method.

16. Arrangement according to claim 14, in which the transmitting device (4) contains a frequency-division multiplexer and the signal-processing unit (5) contains a frequency-division demultiplexer for transmitting the received signals (Rⱼ) in a frequency-division multiplex method.

17. Arrangement according to one of claims 14 to 16, in which the transmitting device (4) transmits the received signals (Rⱼ) in the form of light from the infrared spectrum.

18. Arrangement according to one of claims 14 to 17, in which the transmitting device (4) transmits the optical signals (OSⱼ) to the signal-processing unit (5) freely.

19. Arrangement according to one of claims 14 to 17, in which the transmitting device (4) is optically coupled to the signal-processing unit (5) by way of at least one optical waveguide (12) in order to transmit the optical signals (OSⱼ).

20. Arrangement according to one of claims 14 to 19, in which the transmitting device (4) transmits the received signals (Rⱼ) in the form of analog optical signals (OSⱼ).

21. Arrangement according to one of claims 14 to 19, in which the transmitting device (4) transmits the received signals (Rⱼ) in the form of digital optical signals (OSⱼ).

22. Arrangement according to one of claims 14 to 21, having
a) at least one sending-time transmitter (7) for providing the sending instants (Tⱼ) for the sending pulses (Pⱼ), and having
b) a further transmitting device (11) for transmitting the sending instants (Tⱼ) from the sending-time transmitter (4 [sic]) to the sending-pulse generator (3) in the form of optical signals (OTⱼ).

23. Arrangement according to claim 22, in which the further transmitting device (11) transmits the sending instants (Tⱼ) in the form of light from the infrared spectrum.

24. Arrangement according to one of claims 22 or 23, in which the further transmitting device (11) is optically coupled to the sending-pulse generator (3) by way of at least one optical waveguide (13) in order to transmit the sending instants (Tⱼ).

25. Arrangement according to claim 24, in which there is provided a common bi-directional optical waveguide for transmitting both the sending instants (Tⱼ) and the received signals (Rⱼ).

26. Arrangement according to one of claims 23 or 24, in which the further transmitting device (11) transmits the sending instants (Tⱼ) in free-beam transmission.

27. Arrangement according to one of claims 14 to 26, in which the array (2), the sending-pulse generator (3) and the transmitting device (4) for the optical transmission of the received signals (Rⱼ) are integrated in an applicator (10), and the sending-time transmitter (7) and the signal-processing unit (5) are integrated in a main apparatus (20).

## Revendications

1. Procédé pour faire une image d'un objet avec des ultrasons, dans lequel
a) plusieurs éléments convertisseurs (Eⱼ) agencés en un réseau (2)
a1) dans un mode d'émission, sont commandés à chaque fois à un instant d'émission associé (Tⱼ) par un générateur d'impulsions d'émission (3) avec une impulsion d'émission électrique associée (Pⱼ) pour émettre des ultrasons pouvant être dirigés sur l'objet, et
a2) dans un mode de réception suivant le mode d'émission, transforment des ultrasons réfléchis par l'objet en signaux reçus (Rⱼ) électriques ;
b) les signaux reçus (Rⱼ) des éléments convertisseurs (Eⱼ)
b1) sont transmis par voie optique avec une largeur de bande optique d'au moins 1 000 MHz à une unité de traitement de signal (5), et
b2) sont utilisés par l'unité de traitement de signal (5) pour construire une image de l'objet.

2. Procédé selon la revendication 1, dans lequel on utilise pour la transmission optique des signaux reçus (Rⱼ) un procédé de multiplexage temporel.

3. Procédé selon la revendication 1, dans lequel on utilise pour la transmission optique des signaux reçus (Rⱼ) un procédé de multiplexage fréquentiel.

4. Procédé selon l'une des revendications précédentes, dans lequel on utilise pour la transmission des signaux reçus (Rⱼ) une lumière du spectre infrarouge.

5. Procédé selon l'une des revendications précédentes, dans lequel on transmet librement les signaux reçus (Rⱼ).

6. Procédé selon l'une des revendications 1 à 4, dans lequel on transmet les signaux reçus (Rⱼ) par l'intermédiaire d'au moins un guide d'ondes lumineuses (12) .

7. Procédé selon l'une des revendications précédentes, dans lequel on transmet les signaux reçus (Rⱼ) sous forme de signaux optiques numériques (OSⱼ).

8. Procédé selon l'une des revendications 1 à 6, dans lequel on transmet les signaux reçus (Rⱼ) sous forme de signaux optiques analogiques (OSⱼ).

9. Procédé selon l'une des revendications précédentes, dans lequel les instants d'émission (Tⱼ) prévus pour les impulsions d'émission (Pⱼ) sont préparés par une horloge d'émission (7) et sont transmis par voie optique par l'horloge d'émission (7) au générateur d'impulsions d'émission (3).

10. Procédé selon la revendication 9, dans lequel on utilise pour la transmission des instants d'émission (Tⱼ) une lumière du spectre infrarouge.

11. Procédé selon la revendication 9 ou la revendication 10, dans lequel on transmet librement les instants d'émission (Tⱼ).

12. Procédé selon la revendication 9 ou la revendication 10, dans lequel on transmet les instants d'émission (Tⱼ) par l'intermédiaire d'au moins un guide d'ondes lumineuses (13).

13. Procédé selon la revendication 6 et la revendication 12, dans lequel on transmet les instants d'émission (Tⱼ) et les signaux reçus (Rⱼ) par l'intermédiaire d'un guide d'ondes lumineuses commun.

14. Dispositif pour faire une image d'un objet avec des ultrasons, comportant
a) un réseau (2) d'éléments convertisseurs (Eⱼ),
b) un générateur d'impulsions d'émission (3) qui commande les éléments convertisseurs (Eⱼ) du réseau (2) à chaque fois à un instant d'émission associé (Tⱼ) avec une impulsion d'émission électrique associée (Pⱼ) pour émettre des ultrasons pouvant être dirigés sur l'objet,
c) une unité de traitement de signal (5) pour construire une image de l'objet à partir de signaux reçus (Rⱼ) qui sont produits par les éléments convertisseurs (Eⱼ) à partir des ultrasons réfléchis par l'objet, et
d) un dispositif de transmission (4) ayant une largeur de bande optique d'au moins 1 000 MHz pour transmettre les signaux reçus (Rⱼ) à l'unité de traitement de signal (5) sous la forme de signaux optiques (OSⱼ).

15. Dispositif selon la revendication 14, dans lequel le dispositif de transmission (4) contient un multiplexeur temporel et l'unité de traitement de signal (5) un démultiplexeur temporel pour la transmission des signaux reçus (Rⱼ) dans un procédé de multiplexage temporel.

16. Dispositif selon la revendication 14, dans lequel le dispositif de transmission (4) contient un multiplexeur fréquentiel et l'unité de traitement de signal (5) un démultiplexeur fréquentiel pour la transmission des signaux reçus (Rⱼ) dans un procédé de multiplexage fréquentiel.

17. Dispositif selon l'une des revendications 14 à 16, dans lequel le dispositif de transmission (4) transmet les signaux reçus (Rⱼ) sous forme de lumière du spectre infrarouge.

18. Dispositif selon l'une des revendications 14 à 17, dans lequel le dispositif de transmission (4) transmet librement les signaux optiques (OSⱼ) à l'unité de traitement de signal (5).

19. Dispositif selon l'une des revendications 14 à 17, dans lequel le dispositif de transmission (4) est couplé par voie optique par l'intermédiaire d'au moins un guide d'ondes lumineuses (12) à l'unité de traitement de signal (5) pour la transmission des signaux optiques (OSⱼ).

20. Dispositif selon l'une des revendications 14 à 19, dans lequel le dispositif de transmission (4) transmet les signaux reçus (Rⱼ) sous la forme de signaux optiques (OSⱼ) analogiques.

21. Dispositif selon l'une des revendications 14 à 19, dans lequel le dispositif de transmission (4) transmet les signaux reçus (Rⱼ) sous la forme de signaux optiques (OSⱼ) numériques.

22. Dispositif selon l'une des revendications 14 à 21, comportant
a) au moins une horloge d'émission (7) pour préparer les instants d'émission (Tⱼ) pour les impulsions d'émission (Pⱼ), et
b) un autre dispositif de transmission (11) pour transmettre les instants d'émission (Tⱼ) de l'horloge d'émission (4) au générateur d'impulsions d'émission (3) sous la forme de signaux optiques (OTⱼ).

23. Dispositif selon la revendication 22, dans lequel l'autre dispositif de transmission (11) transmet les instants d'émission (Tⱼ) sous la forme de lumière du spectre infrarouge.

24. Dispositif selon l'une des revendications 22 ou 23, dans lequel l'autre dispositif de transmission (11) est couplé par voie optique par l'intermédiaire d'au moins un guide d'ondes lumineuses (13) au générateur d'impulsions d'émission (3) pour la transmission des instants d'émission (Tⱼ).

25. Dispositif selon la revendication 24, dans lequel un guide d'ondes lumineuses commun bidirectionnel est prévu pour la transmission aussi bien des instants d'émission (Tⱼ) que des signaux reçus (Rⱼ).

26. Dispositif selon l'une des revendications 23 ou 24, dans lequel l'autre dispositif de transmission (11) transmet les instants d'émission (Tⱼ) selon une transmission à faisceau libre.

27. Dispositif selon l'une des revendications 14 à 26, dans lequel le réseau (2), le générateur d'impulsions d'émission (3) et le dispositif de transmission (4) pour la transmission optique des signaux reçus (Rⱼ) sont intégrés dans un applicateur (10) et l'horloge d'émission (7) et l'unité de traitement de signal (5) sont intégrées dans un appareil principal (20).
